# EUROPEAN PATENT SPECIFICATION

(11) **EP 2 513 700 B1**
(45) Date of publication and mention of the grant of the patent: **24.08.2016**
(21) Application number: 09852362.4
(22) Date of filing: 18.12.2009
(51) Int. Cl.: G02B 27/01, F41G 1/30, G02B 23/10, F41G 1/38, F41G 1/473

(54) **AIMING DEVICE WITH A RETICLE DEFINING A TARGET AREA AT A SPECIFIED DISTANCE**
ZIELVORRICHTUNG MIT EINEM FADENKREUZ ZUR DEFINITION EINES ZIELBEREICHS IN EINEM BESTIMMTEN ABSTAND
DISPOSITIF DE VISÉE MUNI D'UN RÉTICULE DÉFINISSANT UNE ZONE CIBLE À UNE DISTANCE SPÉCIFIÉE

(43) Date of publication of application: 24.10.2012
(73) Proprietor: Redring AB, 475 40 Hönö (SE)
(72) Inventor: ÖSTERGREN, P.O., S-715 93 Odensbacken (SE); VILHELMSSON, Kennet, S-433 50 Partille (SE); ERIKSSON, Niklas, S-433 62 Sävedalen (SE)
(86) International application number: PCT/SE2009/051462
(87) International publication number: WO 2011/075027

(56) References cited:
- WO-A1-95/31740
- WO-A2-2008/045129
- DE-U1- 20 304 362
- DE-U1-202006 015 136
- US-A- 3 565 539
- US-A- 3 565 539
- US-A- 4 458 436
- US-A- 4 665 622
- US-A1- 2002 078 618
- US-A1- 2003 012 015
- US-A1- 2006 164 704
- US-A1- 2009 217 565
- US-B1- 6 327 807
- US-B1- 6 373 628

## Description

### TECHNICAL FIELD

The present invention relates to an improved aiming device having a reticle. The reticle is adapted to correspond to predetermined target area at a specific distance from the aiming device.

### BACKGROUND OF THE INVENTION

Optical aiming devices which have a reticle produced from a light source, such as a light emitting diode (LED) or laser diode, are commonly used for aiming firearms, such as pistols, rifles, assault rifles, shot guns or the like. The reticle is projected onto a semi transparent mirror or lens which reflects the reticle image onto the eye retina of the user, i.e. the shooter. Hence the user can see both the field of view and the projected image of the reticle simultaneously. The mirror or lens is usually a semi transparent concave mirror which reflects the light from the light source as collimated beams; this enables a parallax free image of the reticle. If only the reticle can be seen, the aiming device is operational. The viewer also perceives the reticle as if the reticle is located at a very remote position from the optical aiming device. The reticle can be dots, rings or other patterns.

US 3 565 539 A discloses an optical aiming device according to the preamble of claim 1.

Another optical aiming device is described in the patent application of US 2002/0078618 A1.

The optical sight in the document comprises a light emitting diode which is arranged in working cooperation with a plurality of reticle patterns which can be selectively illuminated. The selective illumination is done by connecting various portions of the reticle's patterns to the source of the power supply. By selectively illuminating different reticles, the viewer is said to enable a high accuracy in positioning the reticle elements. No moving parts are used as the illumination of the reticle is done by means of electrically switching between the reticle patterns. The brightness of the image can be adjusted by changing the current supplied to the LED. Further, a feedback line can be connected to adjust the brightness of the LED as a function of the environmental lighting conditions. The document is however silent of how to achieve this.

Another sight is disclosed in the US patent publication No. US 6,565,539, J. La Russa. The sight has a partly transparent mirror for reflecting a reticle to the user. The reticle can have the form of a ring and circumscribe a specified area at a specified distance. In the US patent publication No. US 4,665,622, Idan, is an optical aiming device for a rifle disclosed. The aiming device uses the principle of a light beam projected and reflected to form a reticle. The aiming device is specifically adapted to a rifle however. The published international patent application No. WO 2008/045129 A2 disclose a projectile aiming system including a computer controllable reticle. The published international patent application No. WO 2008/045129 A1, Environmental research institute of Michigan, disclose a pistol sight of the above mentioned principle. The sight has an attachment arrangement which encompass the barrel of the pistol. The US patent publication No. US 4,458,436, Bohl, disclose a sight for shotguns with a conic frustrum fixed to a mounting of the gun.

US 2006/0164704 A1 disclose an optical sight similar to the one described above which uses a laser emitting diode as a light source. The laser diode emits the light onto a semitransparent mirror which reflects the light in the form of a reticle image onto the retina of the viewer. The brightness of the reticle can be changed by manipulating the duty cycle of the signals that is applied to the laser diode. The proposed solution only regulates the standard illumination of the reticle.

WO 95/31740 A1 - disclose a holographic sight connectable to a pistol. The sight includes an achromatizing means for reducing shifts in the position of the reticle pattern due to variations in the wave length of the light beam emitted from the laser diode. The sights is said to enable reticles of different sizes and even 3D reticles. The sight may comprise an ambient light sensor to adjust the intensity of the reticle.

During e.g. skeet shooting, the shooter needs to track the trajectory of the clay disc flung across the air. When using optical aiming devices of the above mentioned types, it has been found that it is difficult to assess the appropriate time to fire. Most too often, a less experienced shooter tracks the clay disc a tenth of a second too long, generally firing too late at which time the clay disc is, if not out of range, at least far off for a perfect hit. The perception of the distance between the shooter and the clay disc is difficult to determine without the appropriate experience. Furthermore, the trajectory and the spread of the charge of hailstones are impossible to track using only eyesight. There is thus a need for an aiming device which addresses at least one of the above mentioned drawbacks.

### SUMMARY OF THE INVENTION

It is an object of the present invention to at least partly solve at least one of the above mentioned drawbacks, or to provide a useful alternative to the above mentioned solutions. The present objective is met by an optical aiming device according to claim 1.

In an embodiment of the present invention, the reticle has a substantially circular form. By the term substantially circular form is meant that the reticle does not need to form a full circle but at least an extension of the reticle should form a circle like form. The reticle, when exhibiting a substantially circular form, has a height and a width. As the size of the reticle is formed as a function of the spread of a charge of hailstones at a predetermined distance, it has been found that by setting size of the mirror as a function of the reticle additionally adds to the shooters perception of the shooting distance and the perception of the shot pattern. The maximum height of the mirror can thus be set as a function of the height and/or width of the reticle.

In an embodiment according to the present invention, the maximum height of the mirror is 3-10 times the height of the retcile, preferably 5-8 times the height of the retcile. Optionally, or additionally, the maximum width of the mirror is 3-10 times the width of the reticle.

As the size of the reticle is formed as a function of the spread of a charge of hailstones at a predetermined distance, i.e. the reticle cover a target area and the target area corresponds to the shot pattern at a predetermined distance from the mirror or lens. It has been found that it is advantageous to detect the light from that specific area to enable the light intensity of the reticle to be adjusted. The optical aiming device can thus be provided with a light sensor arrangement. The light sensor arrangement is adapted to measure the light at a predetermined area at the predetermined distance. This will add to the shooters perception of the shot pattern, as the light collected by the light sensor arrangement collects light at least from the actual target area covered by the reticle. The predetermined area can thus be set as a function of the target area covered by the reticle, and thereby the reticle, at the predetermined distance, which is preferably 20 meters from the lens of the light sensor arrangement but can also be calculated from the mirror of the optical aiming device.

The mirror is preferably a partly transparent mirror.

### BRIEF DESCRIPTION OF THE DRAWINGS

The present invention will be described in greater detail with reference to the accompanying figures in which;
figure 1 shows a schematic view from the side and shown partly with a transparent housing of an optical aiming device according to the present invention;
figure 2 shows the optical aiming device as shown in figure 1, with parts shown as a cross section, and with a view as seen along the longitudinal extension L towards a target, as seen by a shooter or user;
figure 3 shows the light sensor arrangement from the optical aiming device shown in figure 1.

### DETAILED DESCRIPTION OF PREFERRED EMBODIMENTS

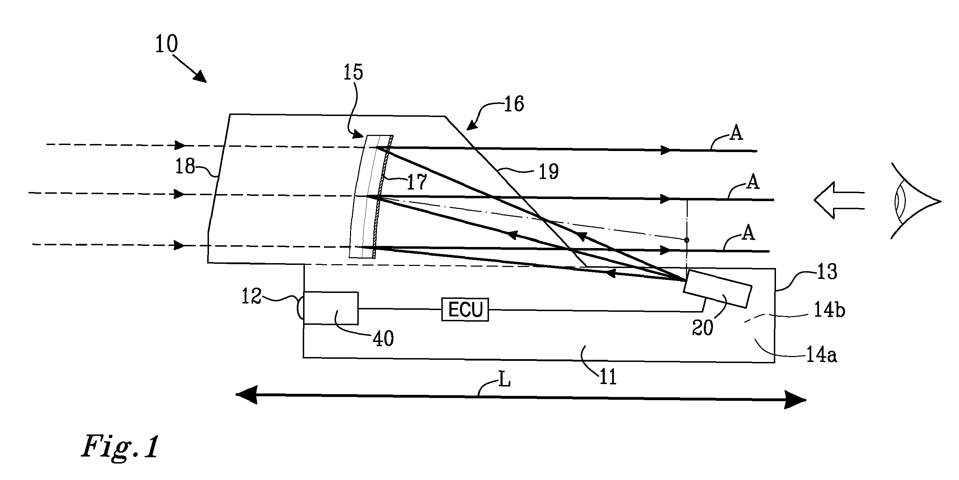

Figure 1 shows an aiming device 10 having a base part 11. The base part 11 is adapted to be fitted onto a shot-gun by means of a dovetail connection or attachment screws or the like (not shown). The base part 11 exhibits a longitudinal extension L, a distal end 12 and a proximal end 13. A first and a second longitudinal side 14a, 14b. The distal end 12 is after assembly with the firearm intended to be closer to the target while the proximal end 13 is intended to be facing towards the eye of the user, i.e. the shooter, during aiming. The aiming device 10 comprises a partly transparent mirror 15, or semi transparent mirror 15, in the shown embodiment substantially in the form of a pellicle. The partly transparent mirror 15 is arranged substantially vertically to the base part 11 and is fixed in a mirror frame 16. The base part 11 and the frame 16 are displayed slightly transparent in figure 1 to provide a clearer illustration of the separate arrangements and functions of the aiming device 10. Instead of using a partly transparent mirror as described below, a mirror can be used which is not transparent or a lens can be used is the light source is positioned opposite the lens with respect to the intended user. In thoses cases a lens is used, the light from the light carrying the reticle from the light source is thus directed through and not reflected.

The partly transparent mirror 15 comprises a slightly concave surface facing the proximal end 13 so as to reflect the light from a light source 20 as indicated by the arrows A. The concave surface is arranged to reflect the light as a collimated beam towards a user and the proximal end 13 of the aiming device 10. The partly transparent mirror can be coated with a light reflecting coating 17. The light reflecting coating 17 preferably reflects light having a wave length of about 650 nm ± 10 nm, which is generally seen as red light. However, other light intervals may be used; light perceived as yellow, green, blue or orange for example. Optionally, the color of the light can be determined by the choice of light source or combinations thereof.

The mirror frame 16 is a rigid frame in which the partly transparent mirror 15 is fixed. The mirror frame 16 is intended to protect the partly transparent mirror 15 from disruptive forces such as compression forces if the aiming device is accidentally dropped. A first and a second opening 18, 19 permits a user, visualized by the eye in figure 1, to see through the frame 16 and the partly transparent mirror 15 to view a target.

The light source 20 can be a light emitting diode (LED), a laser, or any other suitable light source, with either an external or internal power source with respect to the aiming device. A lithium battery (not shown) can be incorporated into the base part 11 or means for connecting the light source to a power source may be arranged to the aiming device 10 and preferably the base part 11. The light source 20 is arranged offset to a centre axis of the aiming device 10 and positioned at a distance from the partly transparent mirror 15, the distance being substantially half the distance of the radius of the curvature of the concave surface of the partly transparent mirror 15, so that the light reflected on the partly transparent mirror 15 is reflected as a collimated beam, as indicated by the arrows A in figure 1. When the light, indicated by the arrows A, carries a reticle, i.e. an image such as a circle, the reticle will be virtually projected onto the target and perceived by a user as if the reticle is positioned a distance away form the user. The reticle however is projected onto the retina of the user during aiming. The firearm is aimed by superimposing the reticle onto the desired target.

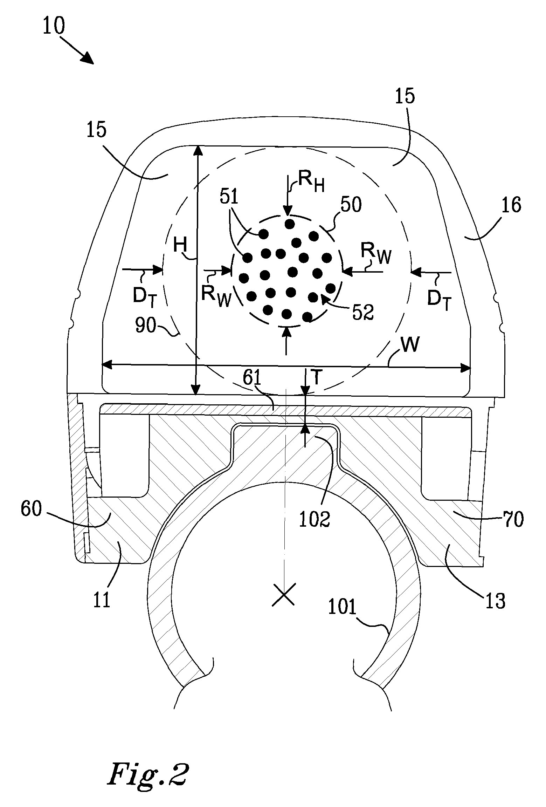

Figure 2 shows the optical aiming device 10 with a view towards the proximal end 13 of the optical aiming device 10. Figure 2 illustrates the potential view which a user could see when aiming with the optical aiming device 10. As is noted, figure 2 shows parts of the base part 11, the frame 16, the partly transparent mirror 15 having a maximum height H and a maximum width W.

Figure 2 further shows a reticle 50. The reticle 50 exhibits the form of a circle, although the reticle 50, defining the periphery of the circular form, is separated into four individual sections. The reticle 50 comprises a first extension R_{H} in the direction of the height H of the partly transparent mirror 15 and a second extension R_{W} in the direction of the width of the partly transparent mirror 15. The reticle 50 delimits an area, which area covers a target area at a specified distance. More precisely, the reticle 50 delimits, and thus covers, a target area at a predetermined distance from the partly transparent mirror 15. As is understood, the target area changes with the distance from the partly transparent mirror 15; the longer the distance, the larger the target area covered by the reticle 50.

Figure 2 further shows parts of the barrels of a break action breech loading double barrel "over and under" shot gun 100, having the barrels vertically positioned one on top of the other. The shot gun 100 is illustrated with a cross section of parts of the over barrel 101 having an aiming bridge 102. The over barrel 101 has a ¼ inch bore.

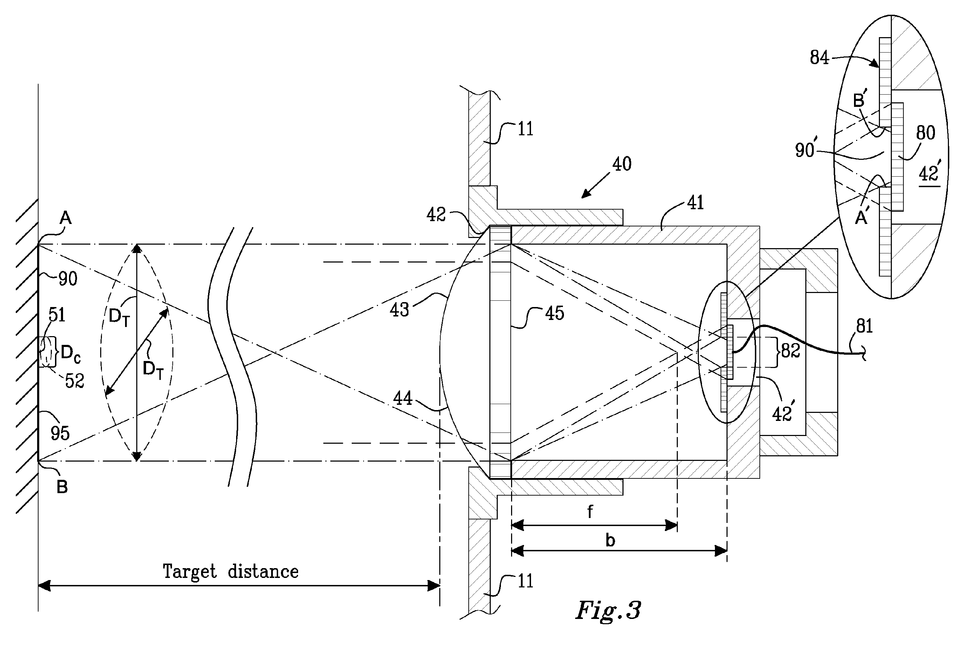

A plurality of hailstones which form a charge of hailstones 51 fired from the shot gun 100 are further shown in figure 2. The reticle 50, when the optical aiming device 10 is aimed as intended, cover a target area 52, which is adapted to correspond to the shot pattern of the charge of hailstones 51 at a predetermined distance. The target area 52 being defined by the reticle 50, when aiming with the optical aiming device 10 as intended. The predetermined distance is advantageously 20 meters. The size of the reticle 50 is thus adapted to cover the spread of the charge of hailstones 51, i.e. the shot pattern, at least in one dimension, e.g. along the width W and/or along the height H. The target area has a diameter D_{C} of about 0,6-0,7 meters at the predetermined distance of 20 meters from the partly transparent mirror 15, as indicated in figure 3.

In an embodiment according to the present invention, the partly transparent mirror 15 extends a height and a width, in figure 2, this is illustrated by the arrows marked H and W. The maximum height H is advantageously 3-10, preferably 5-8, times the extension R_{H} of the reticle 50. The maximum width is advantageously 3-10, preferably 5-8, times the extension R_{W} of the reticle 50. In this embodiment, both the reticle 50 and the size of the partly transparent mirror 15 are correlated with the spread of the charge of hailstones 51 at a predetermined distance. In this case the predetermined distance is 20 meters from the partly transparent mirror 15 of the optical aiming device 10.

The base part 11 comprises a first section 60 and a second section 70. The first and the second section 60, 70 both extends along the longitudinal extension L, as shown in figure 1, and are arranged on either side of the barrel 101, as shown in figure 2. The first and the second section 50, 60 are connected by a bridge section 61. The first and the second sections 60, 70 are both adapted to carry electronics, e.g. the light sensor arrangement 40, an ECU, a light source and a power supply, e.g. lithium batteries. It should be noted that any portable power supply could do, such as solar cells or the like.

The bridge section 61 is thin, i.e. not having a thickness T above 5 mm. This enables the partly transparent mirror 15 to be closely fitted to the barrel 101 and the aiming bridge 102 of the barrel 101. A user is thus permitted to readily aim close to, and along, the aiming bridge 102 although still using the benefits of the optical aiming device 10 of the present invention. The bridge section 61 is adapted to provide some rigidity to the optical aiming device 10, and of course to the first and the second section 60, 70. However, the frame 16 is the main member which imparts stability to the optical aiming device 10 and the first and the second section 60, 70. In the shown embodiment, the bridge section 61 between the first and the second section 60, 70 is adapted to provide space for electric circuit lines or cables (not shown) between e.g. a power source and the light source.

The aiming device 10 further comprises a light sensor arrangement 40, shown in figure 1. The light sensor arrangement 40 is arranged at the distal end 12 of the aiming device 10 and detecting light from the area in front of the aiming device 10 only, as will be described below. The light sensor arrangement 40 detects the intensity of the light in the ambient environment in front of the aiming device 10. However, due to the configuration of the light sensor arrangement 40, light from a predetermined area 95 at a predetermined distance from the light sensor arrangement 40 is collected. The light due to the present invention can thus be collected from the actual target scene, i.e. a predetermined area 95, and at least from the area superimposed by the reticle 50, i.e. the target area 52, at a predetermined distance.

The predetermined area 95 is specified as a function of the distance from the light sensor arrangement 40, and more specifically from a lens used in the light sensor arrangement. An electronic control unit ECU, microprocessor or a CPU, is arranged in working cooperation with the light sensor arrangement 40 and the light source 20 or optionally with the power source of the light source 40, to adjust the intensity of the reticle 50 as a function of the detected light intensity of a predetermined area at a distance of about 20 meters. The user thus gets an automatic adjustment of the light intensity of the reticle 50 as a function of the light reflecting properties which at least the reticle 50 superimposes or covers.

Figure 3 shows with a schematic view a cross section of the light sensor arrangement 40, light beams detected by the light sensor arrangement 40, and a light detection area on a target scene background or on a target itself. The target scene background can be parts of a forest, a tree, a bush, a hill, an animal, or the like. As is understood, all these different target scene backgrounds, or the target itself, will exhibit variations in the light reflected back to the aiming device, thus requiring different light intensity of the sight to provide the best and most comfortable aiming conditions for the user.

The light sensor arrangement 40 comprises a housing 41, in this case a separate housing from the base part 11, however, a cavity in the base part 11 can advantageously form the housing 41. The interior of the housing is generally adapted to absorb light, i.e. to not reflect any light from the interior surface. Such reflections could cause less accurate readings of the light sensor arrangement 40. The housing 41 exhibits a substantially cylindrical form with an envelope housing wall and a first opening 42 and a second opening 42' at each end of the housing 41. In this embodiment, the interior surface of the envelope wall comprises a light absorbing material or function. A coating with a light absorbing material, such as a color perceived as black, and/or the housing itself can be made of a light absorbing material, or at least with low reflective light properties, for example.

Positioned at the first opening 42 is an optical lens 43 having a convex surface 44 facing towards the target area, i.e. away from the user after the aiming device 10 has been assembled as intended with the shot gun. The surface 45 facing towards the second opening 43 of the housing 41 exhibits a substantially fiat surface. The lens 43 is thus plano-convex, although a biconvex (also referred to as convex) lens may also be used. The lens 43 and the convex surface 44 comprise a radius of about 5-10 mm.

A detector 80 is arranged in the second opening 42'. The detector 80 is preferably a semiconductor photo diode, but sensors using light dependent resistors or photo transistors can also be used.

Although only one lens is described above together with the detector 80, a plurality of lenses, i.e. a lens system, or at least two lenses are advantageously used in the light sensor arrangement 40 to direct the incoming light to the detection surface of the detector 80. The used detection surface of the detector 80 is referred to as the effective detector area, hence that area of the detector which is actually used to detect the incoming light waves.

As is shown in figure 3, the light sensor arrangement 40 receives and detects light from a predetermined area 90, at a predetermined distance. The predetermined distance in figure 3 is also referred to as the target distance. The predetermined area 90, in this case a wall 95 having a color perceived as black, is positioned at a distance of 20 m from the lens 43 of the sensor arrangement 40 of the aiming device 10. The lens 43 collects substantially all light form the ambient environment in front of the aiming device 10, however, due to the distance between the lens 43 and the detector 80 is arranged at a distance b, which can be in the order of 2-25 mm, preferably in the order of 5-20 mm, most preferred in the range of 10-16 mm, the only detected light will be that of the predetermined area 90, which in this case is at a distance of 20 m (the target distance) from the lens 43.

The detector 80 has an effective detector area 82. The effective detector area 82 is the area of the detector 80 which is active in terms of responding to the incoming light waves, The effective detector area 82 can be adjusted by means of an adjustable shutter 84. The shutter 84 can however be of a fixed type, i.e. one permanent size of the aperture in the shutter, or it can be of an adjustable type, i.e. the size of the aperture can be adjusted either manually or electrically. By using an adjustable shutter 84 the size of the predetermined area at a predetermined distance, e.g. 20 meters from the lens 43 can be adjusted.

The focal point of the lens 43 is arranged between the detector 80 and the convex surface 44 of the lens 43, at a distance f from the lens 43. The distance f from the lens 43 to the focal point is indicated in figure 3. As mentioned, the only detected light by the detector 50 is the reflected light from a predetermined area at a predetermined distance from the lens 43. In figure 3, this is illustrated by light reflected from the target area as two cones formed between the extremes A and B of the predetermined area 90. The light reflected from each point A and B, is collected by the lens 43 and diverged to an image plane 90' of the target area 90 delimited by the shutter 84 and collected by the effective detector area by the detector 50. The image distance from the lens 43 is referred to as b in figure 3. To control the size of the predetermined area 90, i.e. the target area, the aperture of the shutter 84 should be positioned in the image plane 90'. The light can thereafter be collected by the detector 80 which is positioned in close proximity to the shutter 84 as indicated in figure 3,

As can be gleaned from figure 3, the light is measured within a void, the void being a three dimensional space void formed between extremes of the collected light, illustrated with the lines between the points A-A' and B-B', and the diameter D_{T} in figure 3.

By either positioning the detector 80 at a specified distance b (the image distance) from the lens 43, or by having a shutter 84, i.e. an aperture at the distance b, the detector 80 only detects light from a predetermined area, in figure 3 referred to as the predetermined area 90, at a predetermined distance from the lens 43. The predetermined area 90, as shown in figure 3, comprises a circular cross section having a diameter D_{T}, which corresponds to about 2,5 meters at a distance of 20 meters from the lens 43.

In an advantageous embodiment the predetermined area 90 at a predetermined distance from the lens 43 can be adapted to have the size as a function of the spread of the charge of hailstones 51, at the distance of 20 meters. Hence, the ratio of the diameter D_{T} of the predetermined area 90 can be at least 2:1 with respect to the spread of the charge of hailstones 51, at the distance of 20 meters. In figure 3 the spread of the charge of hailstones 51 which after firing the shot gun 100 has hit the wall 95 and forms a shot pattern with a diameter D_{C}. The shot pattern is in turn corresponding to the target area 52 which is defined by the reticle 50, thus the target area 52 has the diameter D_{C}. The diameter D_{T} of the predetermined area 90 can be at least twice as large as the diameter D_{C} of the target area 52 defined by the reticle 50. In an embodiment the ratio is about 10-16 to 8:1, preferably 10-16 to 5:1. This enables a sufficient amount of light to be detected at the target area to smoothly adjust the light intensity of the sight and thus provide an improved aiming device. It also enables a shooter to get an improved perception of the distance between the shooter and the target after using an optical aiming device according to the present invention as the changes in the light intensity of the reticle 50 can be correlated to a specific distance to the target and a specified predetermined area 90.

The predetermined distance is calculated from the lens 43 of the light sensor arrangement 40 when described with respect to the light measurement features and from the partly transparent mirror 15 when described with respect to the target area 52 and the reticle 50. The distance between the lens 43 and the partly transparent mirror 15 is generally negligible, i.e. generally less than 20 cm; however, in cases where it is not negligible, the predetermined distance should be calculated form the partly transparent mirror 15 of the optical aiming device.

## Claims

1. An optical aiming device (10) for aiming a shot gun (100) having a barrel (101) with an aiming bridge (102) and which upon firing a shot provides a shot pattern, said optical aiming device comprising;
a base part (11) having an extension (L), a distal and a proximal end (12, 13) and comprising means for attaching said aiming device (10) to said shot gun (100);
a mirror or lens (15) having a maximum height (H) and a maximum width (W);
a light source (20), said light source (20) being arranged to project light on said mirror (15) or lens, wherein said mirror (15) or lens is arranged to reflect or redirect at least parts of said light (A) in a first direction, said projected light forming a reticle (50);
said reticle (50) defining a target area (52), and in that said target area (52) corresponds to the shot pattern at a predetermined distance from said transparent mirror (15) or lens;
**characterized in that**:
said optical aiming device (10 comprises a light sensor arrangement (40) adapted to detect the intensity of the light of a predetermined area (95) at a predetermined distance from the light sensor arrangement (40), whereby the light in the ambient environment in front of the aiming device (10) is collected by a convex lens (43) and directed to a detector (80), whereby a shutter (84) is confgured to adjust an effective detector area (82) of said detector (80) in accordance with the size of the predetermined area (95),
whereby the optical aiming device (10) comprises means to adjust the intensity of the reticle (50) as a function of the detected light intensity.

2. The optical aiming device (10) according to claim 1, **characterized in that** said predetermined distance is 20 meters.

3. The optical aiming device (10) according to claims 1 or 2, **characterized in that** said reticle (50) has a substantially circular form having a height (R_{H}) and a width (R_{W}).

4. The optical aiming device (10) according to any preceding claims, **characterized in that** said maximum height (H) of said mirror (15) is set as a function of the height (R_{H}) of the reticle (50).

5. The optical aiming device (10) according to claim 4, **characterized in that** said maximum height (H) is 3 -10 times the height (R_{H}) of the reticle (50).

6. The optical aiming device (10) according to any preceding claims, **characterized in that** said maximum width (W) of said mirror (15) or lens is set as a function of the width (R_{W}) of the reticle (50).

7. The optical aiming device (10) according to claim 6, **characterized in that** said maximum width (W) is 3 - 10 times the width (R_{W}) of the reticle (50).

8. The optical aiming device (10) according to any preceding claims, **characterized in that** said mirror (15) or lens is a partly transparent mirror.

9. The optical aiming device (10) according to any preceding claims, **characterized in that** the reticle (50) is adapted to have an area substantially equal to the area of the spread of the charge of hailstones (51) at said predetermined distance.

## Patentansprüche

1. Optische Zielvorrichtung (10) zum Zielen mit einer Schrotflinte (100), die einen Lauf (101) mit einer Zielbrücke (102) aufweist und nach dem Abfeuern eines Schusses ein Schussmuster erzeugt, wobei die optische Zielvorrichtung (10) Folgendes aufweist:
- einen Grundteil (11) mit einer Erstreckung (L), einem distalen und proximalen Ende (12, 13) und Mitteln zur Montieren der optischen Zielvorrichtung (10) an der Schrotflinte (100);
- einen Spiegel oder eine Linse (15) mit einer maximalen Höhe (H) und maximalen Breite (W);
- eine Lichtquelle (20), welche angeordnet ist, um Licht auf den Spiegel (15) oder die Linse zu projizieren, wobei der Spiegel (15) oder die Linse angeordnet ist, um zumindest Teile des Lichts (A) in eine erste Richtung umzuleiten oder zu reflektieren und das projizierte Licht ein Absehen (50) ausbildet;
wobei das Absehen (50) eine Zielfläche (52) definiert, die dem Schussmuster in einer vorgegeben Entfernung vom transparenten Spiegel (15) oder von der Linse entspricht;
**dadurch gekennzeichnet, dass**:
die optische Zielvorrichtung (10) eine Lichtsensoranordnung (40) aufweist, die dazu ausgelegt ist, die Lichtintensität einer vorgegebenen Fläche (95) in einer vorgegebenen Entfernung von der Lichtsensoranordnung (40) zu detektieren, wobei das Umgebungslicht vor der Zielvorrichtung (10) durch eine Konvexlinse (43) gesammelt und zu einem Detektor (80) umgelenkt ist,
ein Verschluss (84) dazu ausgelegt ist, eine effektive Detektorfläche (82) des Detektors (80) gemäß der Größe der vorgegebenen Fläche (95) anzupassen, und
die optische Zielvorrichtung (10) Mittel aufweist, um die Intensität des Absehens (50) als Funktion der detektierten Lichtintensität anzupassen.

2. Optische Zielvorrichtung (10) nach Anspruch 1, **dadurch gekennzeichnet, dass** die vorgegebene Entfernung 20 m beträgt.

3. Optische Zielvorrichtung (10) nach Ansprüchen 1 oder 2, **dadurch gekennzeichnet, dass** das Absehen (50) eine im Wesentlichen kreisförmige Form mit einer Höhe (R_{H}) und einer Breite (R_{W}) aufweist.

4. Optische Zielvorrichtung (10) nach einem der vorherigen Ansprüche, **dadurch gekennzeichnet, dass** die maximale Höhe (H) des Spiegels (15) als Funktion der Höhe (R_{H}) des Absehens (50) eingestellt ist.

5. Optische Zielvorrichtung (10) nach Anspruch 4, **dadurch gekennzeichnet, dass** die maximale Höhe (H) drei- bis zehnmal größer ist als die Höhe (R_{H}) des Absehens (50).

6. Optische Zielvorrichtung (10) nach einem der vorherigen Ansprüche, **dadurch gekennzeichnet, dass** die maximale Breite (W) des Spiegels (15) oder der Linse als Funktion der Breite (R_{W}) des Absehens (50) eingestellt ist.

7. Optische Zielvorrichtung (10) nach Anspruch 6, **dadurch gekennzeichnet, dass** die maximale Breite (W) drei- bis zehnmal größer ist als die Breite (R_{W}) des Absehens (50).

8. Optische Zielvorrichtung (10) nach einem der vorherigen Ansprüche, **dadurch gekennzeichnet, dass** der Spiegel (15) oder die Linse ein teiltransparenter Spiegel ist.

9. Optische Zielvorrichtung (10) nach einem der vorherigen Ansprüche, **dadurch gekennzeichnet, dass** das Absehen (50) so ausgelegt ist, dass eine Fläche im Wesentlichen gleich zur Fläche der Ausbreitung der Schrotladung (51) in der vorgegeben Entfernung ist.

## Revendications

1. Dispositif de visée optique (10) pour diriger un fusil de chasse (100) ayant un canon (101) avec un pont de visée (102) et qui, lors d' un tir, fournit un motif de tir, ledit dispositif de visée optique comprenant
une partie de base (11) ayant une étendue (L), une extrémité distale et une extrémité proximale (12, 13) et comprenant des moyens pour fixer ledit dispositif de visée (10) sur une arme (100),
un miroir ou une lentille (15) ayant une hauteur maximale (H) et une largeur maximale (W),
une source de lumière (20), la source de lumière (20) étant agencée pour projeter de la lumière sur le miroir (15) ou la lentille, le miroir (15) ou la lentille étant agencé(e) pour réfléchir ou rediriger au moins des parties de la lumière (A) dans une première direction, ladite lumière projetée formant une visée (50),
la visée (50) définissant une zone de cible (52), et la zone de cible (52) correspondant au motif de tir à une distance prédéterminée du miroir transparent (15) ou la lentille,
**caractérisé en ce que**
le dispositif de visée (10) comprend un agencement de capteurs de lumière (40) adapté pour détecter l'intensité de la lumière d'une zone prédéterminée (95) à une distance prédéterminée de l'agencement de capteurs de lumière (40), la lumière dans l'environnement ambient devant le dispositif de visée (10) étant collectée par une lentille convexe (43) et dirigée vers un détecteur (80), un obturateur (84) étant configuré pour ajuster une zone de détection effective (82) du détecteur (80) selon la taille de la zone prédéterminée (95),
le dispositif de visée optique (10) comprenant des moyens pour ajuster l'intensité de la visée (50) en fonction de l'intensité de lumière détectée.

2. Dispositif de visée optique (10) selon la revendication 1, **caractérisé en ce que** la distance prédéterminée est de 20 m.

3. Dispositif de visée optique (10) selon la revendication 1 ou 2, **caractérisé en ce que** la visée (50) a une forme sensiblement circulaire avec une hauteur (R_{H}) et une largeur (R_{W}).

4. Dispositif de visée optique (10) selon l'une des revendications précédentes, **caractérisé en ce que** la hauteur maximale (H) du miroir (15) est fixée en fonction de la hauteur (R_{H}) de la visée (50).

5. Dispositif de visée optique (10) selon la revendication 4, **caractérisé en ce que** la hauteur maximale (H) est de 3 à 10 fois la hauteur (R_{H}) de la visée (50).

6. Dispositif de visée optique (10) selon l'une quelconque des revendications précédentes, **caractérisé en ce que** la largeur maximale (W) du miroir (15) ou de la lentille est fixée en fonction de la largeur (R_{W}) de la visée (50).

7. Dispositif de visée optique (10) selon la revendication 6, **caractérisé en ce que** la largeur maximale (W) est de 3 à 10 fois la largeur (R_{W}) de la visée (50).

8. Dispositif de visée optique (10) selon l'une quelconque des revendications précédentes, **caractérisé en ce que** le miroir (15) ou la lentille est un miroir partiellement transparent.

9. Dispositif de visée optique (10) selon l'une quelconque des revendications précédentes, **caractérisé en ce que** la visée (50) est adaptée pour avoir un champ sensiblement égal au champ de dispersion de la charge de plombs (51) à la distance prédéterminée.
